# EUROPEAN PATENT APPLICATION

(11) **EP 1 912 152 A2**
(43) Date of publication of application: **16.04.2008**
(21) Application number: 07117520.2
(22) Date of filing: 28.09.2007
(51) Int. Cl.: G06F 21/00, G06F 21/24

(54) **Data printing system, data processing apparatus and printer apparatus**

(30) Priority: 11.10.2006 JP 2006277904; 16.11.2006 JP 2006310286
(71) Applicant: Murata Machinery, Ltd., 3 Minami Ochiai-cho, Kisshoin Minami-ku, Kyoto-shi, Kyoto (JP)
(72) Inventor: Miyazaki, Jinichi, Murata Machinery, Ltd, Kyoto Gifu 612-8686 (JP); Uemura, Hirokazu, Comtec Gifu Corporation, Gifu Gifu 500-8842 (JP)
(74) Representative: Ackroyd, Robert

(57) **Abstract**

A data printing system 1000 according to the invention includes a data processing apparatus 100 and a printer apparatus 200. The data processing apparatus includes a transmission converting unit 130, a data transmitting unit 140, a transmission confirming unit 150, and an alarm providing unit 160. The transmission converting unit converts electronic data to be printed out into print data. The data transmitting unit transmits the converted print data to the printer apparatus. The transmission confirming unit detects an alteration of the printed out electronic data. The alarm providing unit provides predetermined alarm data to the print data to be transmitted when the alteration is detected. The printer apparatus includes a data receiving unit 210, a data printing unit 220, an alarm detecting unit 230, and an alarm reporting unit 250. The data receiving unit receives the print data from the data processing apparatus. The data printing unit prints out the received print data. The alarm detecting unit detects the alarm data provided on the received print data. The alarm reporting unit reports an alteration alarm when the alarm data is detected.

## Description

### BACKGROUND OF THE INVENTION

### 1. Field of the Invention

The present invention relates to a data printing system that converts electronic data into print data and transmits the same from a data processing apparatus to a printer apparatus.

### 2. Description of the Related Art

At present, when electronic data such as document data or image data are printed out by the data processing apparatus such as, so-called personal computer, the data processing apparatus converts the electronic data into print data by a printer driver, which is installed therein, and outputs the same to the printer apparatus.

When the printer apparatus includes a page printer, the printer driver in the data processing apparatus generates the print data with a Page Description Language (PDL).

The page description language includes an extensible Markup Language Paper Specification (XPS), a Printer Control Language (PCL, registered trademark), a Laser Beam Printer Image Processing System (LIPS, registered trademark), and a PostScript (registered trademark).

Guarantee of credibility of the electronic data as an original by providing authentication data such as a digital signature to the electronic data as described above is also executed. For example, a hash value of the digital data is stored in the digital signature as the authentication data by being encrypted by a secret key of a data creator.

Therefore, as is commonly known, the fact that the creator is authenticated and that the electronic data is not altered are confirmed by creating the hash value from the electronic data or the like, decoding the hash value stored in the digital signature by a public key of the creator, and proving that the hash values match.

The electronic data having the authentication data such as the digital signature added thereto is generally important. Therefore, as is commonly known, when the electronic data having the authentication data applied thereto is converted into the print data and outputted to the printer apparatus by the data processing apparatus, the electronic data is authenticated by the printer apparatus, and then is printed out.

With the data processing apparatus described above, the presence or absence of an alteration of electronic data is confirmed by a predetermined data processing using the digital signature. However, with this printer apparatus, only the authenticated user is able to confirm the presence or absence of the alteration of the electronic data stored in the data processing apparatus.

With the printer apparatus described above, when the alteration of the electronic data is detected by an electronic watermark, the electronic data becomes completely black when it is printed out. Then, whether the electronic data is correct or not is determined by the electronic signature and, depending on the result of determination, the electronic data is sorted to true and correct data or normal data and is printed out.

Therefore, the inadequate electronic data is prevented from being printed out as adequate data. However, in both cases, the electronic data is subjected to the authentication process in the printer apparatus. Therefore, it is necessary to install specific hardware or software to the printer apparatus.

### SUMMARY OF THE INVENTION

In view of such circumstances, a first object of the invention is to enable the printer apparatus to report the people around the fact, for example, that an ill-intentioned user alters electronic data and outputs the same, or to enable the user to know the fact that the printed out electronic data is altered.

In view of such circumstances, a second object of the invention is to enable the printer apparatus to prevent the inadequate electronic data to be printed out as adequate electronic data even with a general structure.

A first data printing system according to the invention includes a data processing apparatus and a printer apparatus. The data processing apparatus includes a transmission converting unit, a data transmitting unit, a transmission confirming unit, and an alarm providing unit. The transmission converting unit converts electronic data to be printed out into print data. The data transmitting unit transmits the converted print data to the printer apparatus. The transmission confirming unit detects an alteration of the printed out electronic data. The alarm providing unit provides predetermined alarm data to the print data to be transmitted when the alteration is detected. The printer apparatus includes a data receiving unit, a data printing unit, an alarm detecting unit, and an alarm reporting unit. The data receiving unit receives the print data from the data processing apparatus. The data printing unit prints out the received print data. The alarm detecting unit detects the alarm data provided on the received print data. The alarm reporting unit reports an alteration alarm when the alarm data is detected.

A second data printing system according to the invention includes a data processing apparatus and a printer apparatus. The data processing apparatus includes an electronic transmission unit for transmitting electronic data to be printed out to the printer apparatus. The printer apparatus includes an electronic receiving unit, a data printing unit, a reception confirming unit, and an alarm reporting unit. The electronic receiving unit receives electronic data from the data processing apparatus. The data printing unit prints out the received electronic data. The reception confirming unit detects an alteration of the received electronic data. The alarm reporting unit reports the alteration alarm when the alteration is detected.

A third data printing system according to the invention includes a data processing apparatus and a printer apparatus. The data processing apparatus includes an output operating unit, a transmission converting unit, a data transmitting unit, a transmission confirming unit, and an alarm providing unit. The output operating unit is used for making a selection between direct output and converted output of electronic data. The transmission converting unit converts the electronic data to be printed out into the print data when the converted output is selected. The data transmitting unit transmits the electronic data to the printer apparatus when the direct output is selected, and transmits the converted print data to the printer apparatus when the converted output is selected. The transmission confirming unit detects an alteration of the electronic data to be printed out when the converted output is selected. The alarm providing unit provides predetermined alarm data on the printed data to be transmitted when the alteration is detected. The printer apparatus includes a data receiving unit, a data printing unit, an alarm detecting unit, a reception confirming unit, and an alarm reporting unit. The data receiving unit selectively receives the electronic data and the print data from the data processing apparatus. The data printing unit prints out the received electronic data or the print data. The alarm detection unit detects the alarm data provided on the received print data. The reception confirming unit detects the alteration of the received electronic data. The alarm reporting unit reports an alteration alarm in both cases where the alteration is detected from the received electronic data and where the alarm data is provided on the received print data.

Therefore, in the data printing system of the invention, when the electronic data to be transmitted from the data processing apparatus to the printer apparatus and printed out is altered, the alteration alarm is reported from the printer apparatus.

A first data processing apparatus according to the invention includes a transmission converting unit, a data transmitting unit, a transmission confirming unit, and an alarm providing unit. The transmission converting unit converts electronic data to be printed out into print data. The data transmitting unit transmits the converted print data to the printer apparatus. The transmission confirming unit detects an alteration of the electronic data to be printed out. The alarm providing unit provides predetermined alarm data to the print data to be transmitted when the alteration is detected.

A second data processing apparatus according to the invention includes an output operating unit, a transmission converting unit, a data transmitting unit, a transmission confirming unit, and an alarm providing unit. The output operating unit makes a selection between direct output and converted output of electronic data. The transmission converting unit converts the electronic data to be printed out into print data when the converted output is selected. The data transmitting unit transmits the electronic data to the printer apparatus when the direct output is selected, and transmits the converted print data to the printer apparatus when the converted output is selected. The transmission confirming unit detects an alteration of the electronic data to be printed out when the converted output is selected. The alarm providing unit provides predetermined alarm data to the print data to be transmitted when the alteration is detected.

A first printer apparatus according to the invention includes a data receiving unit, a data printing unit, an alarm detecting unit, and an alarm reporting unit. The data receiving unit receives print data from a data processing apparatus. The data printing unit prints out the received print data. The alarm detecting unit detects alarm data provided on the received print data. The alarm reporting unit reports an alteration alarm when the alarm data is detected.

A second printer apparatus according to the invention includes an electronic receiving unit, a data printing unit, a reception confirming unit, and an alarm reporting unit. The electronic receiving unit receives electronic data from a data processing apparatus. The data printing unit prints out the received electronic data. The reception confirming unit detects an alteration of the received electronic data. The alarm reporting unit reposts an alteration alarm when the alteration is detected.

A third printer apparatus according to the invention includes a data receiving unit, a data printing unit, an alarm detecting unit, and an alarm reporting unit. The data receiving unit selectively receives electronic data and print data from a data processing apparatus. The data printing unit prints out the received electronic data or the print data. The alarm detecting unit detects alarm data provided on the received print data. The reception confirming unit detects an alteration of the received electric data. The alarm reporting unit reports an alteration alarm in both cases in which the alteration is detected from the received electronic data and in which the alarm data is provided on the received print data.

The data processing apparatus according to the invention is the processing apparatus and includes a signature confirming unit and a data processing unit. The signature confirming unit confirms whether the outputted electronic data is adequate or inadequate on the basis of the digital signature. The data processing unit executes a predetermined processing to the electronic data when it is not determined to be adequate.

Therefore, in the data processing apparatus according to the invention, a predetermined process is executed when the electronic data outputted to the printer apparatus as print data is not confirmed to be adequate by the digital signature. Therefore, for example, printing out the inadequate electronic data as an adequate data is prevented.

Various components according to the invention need only be formed so as to achieve their functions. For example, it is achieved by specific hardware which demonstrates a specific function, a data processing apparatus provided with a predetermined function by a computer program, a predetermined function achieved in the data processing apparatus by the computer program, and a given combination thereof.

The various components in the invention do not necessarily have to be an individually independent existence. Cases such that plurality of the components are formed as a single member, that a single component includes a plurality of members, that a certain component is a part of another component, or that a part of certain component and a part of another component are overlapped with each other may also be applicable.

In the data printing system according to the invention, when electronic data sent from the data processing apparatus to the printer apparatus and printed out is altered, an alteration alarm is reported from the printer apparatus. Therefore, for example, the fact that an ill-intentioned user alters the electronic data and prints out the same is reported to the people surrounding the apparatus, and the face that the printed out electronic data is altered is reported to the user.

With the data processing apparatus according to the invention, when the electronic data outputted to the printer apparatus as print data is not confirmed to be adequate by the digital signature, a predetermined process is executed. Therefore, for example, even when the printer apparatus of a general structure is used, the inadequate electronic data is prevented to be printed out as being adequate.

Other features, elements, processes, steps, characteristics and advantages of the invention will become more apparent from the following detailed description of preferred embodiments of the invention with reference to the attached drawing.

### BRIEF DESCRIPTION OF THE DRAWINGS

Fig. 1 is a schematic block diagram showing a logical structure of a data printing system according to a first embodiment of the invention.

Fig. 2 is a flowchart showing a process of operation of a data processing apparatus.

Fig. 3 is a flowchart showing a process of operation of a printer apparatus.

Fig. 4 is a front view showing a function setting display of a printer controller according to a modification of the first embodiment.

Fig. 5 is a schematic block diagram showing a logical structure of a data processing apparatus according to a second embodiment of the invention.

Fig. 6 is a flowchart showing a method of data processing in the data processing apparatus.

Fig. 7 is a front view showing a function setting display of a printer driver according to a modification of the second embodiment.

### DETAILED DESCRIPTION OF PREFERRED EMBODIMENTS

### First Embodiment

While the invention has been described with respect to preferred embodiments thereof, it will be apparent to those skilled in the art that the disclosed invention may be modified in numerous ways and may assume many embodiments other than those specifically set out and described above. Accordingly, the appended claims are intended to cover all modifications of the invention that fall within the true spirit and scope of the invention.

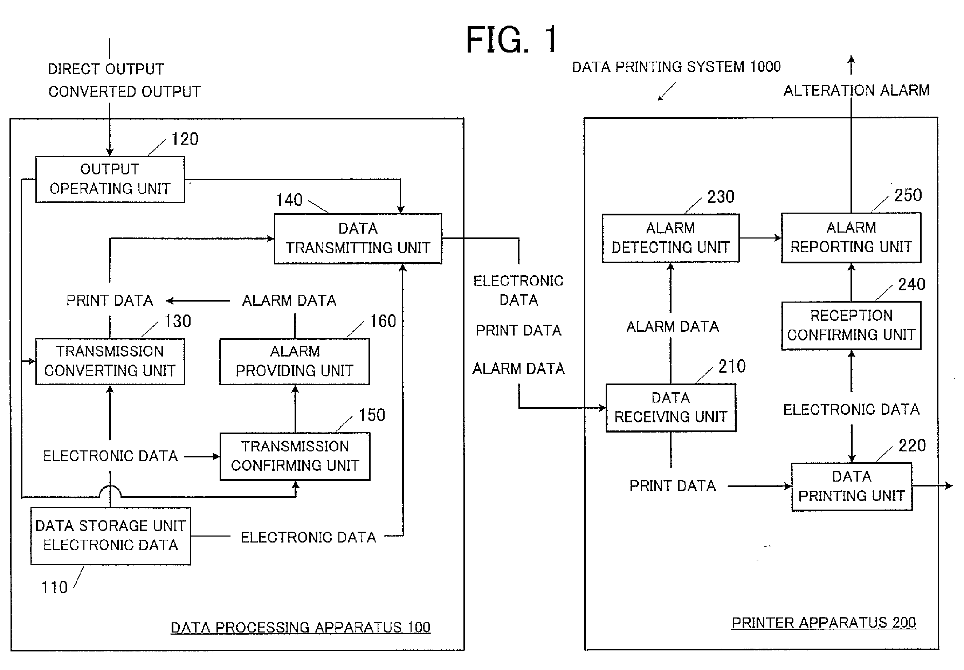

Referring now to the drawings, a first embodiment of the invention will be described below. A data printing system 1000 of the first embodiment includes a data processing apparatus 100 and a printer apparatus 200 as illustrated in Fig. 1.

The data processing apparatus 100 includes a data storage unit 110, an output operating unit 120, a transmission converting unit 130, a data transmitting unit 140, a transmission confirming unit 150, and an alarm providing unit 160. The data storage unit 110 stores electronic data. The output operating unit 120 makes a selection between direct output and converted output of the stored electronic data. The transmission converting unit 130 converts electronic data to be printed out into print data when the converted output is selected. When the direct output is selected, the data transmitting unit 140 transmits the electronic data to the printer apparatus 200. When the converted output is selected, the data transmitting unit 140 transmits the converted print data to the printer apparatus 200. When the converted output is selected, the transmission confirming unit 150 detects an alteration of the electronic data to be printed out. When the alteration is detected, the alarm providing unit 160 provides predetermined alarm data to the print data to be transmitted.

The printer apparatus 200 include a data receiving unit 210, a data printing unit 220, an alarm detecting unit 230, a reception confirming unit 240, and an alarm reporting unit 250. The data receiving unit 210 selectively receives the electronic data and the print data from the data processing apparatus 100. The data printing unit 220 prints out the received electronic data or the print data. The alarm detecting unit 230 detects the alarm data provided on the received print data. The reception confirming unit 240 detects an alteration of the received electronic data. The alarm reporting unit 250 reports an alteration alarm in both cases where the alteration is detected from the received electronic data, and where the alarm data is provided on the received print data.

More specifically, the data processing apparatus 100 includes a computer unit (not illustrated), a storage device, a display device, an input device, and a communication device as hardware (not illustrated) . The computer unit includes a Central Processing Unit (CPU), a Read Only Memory (ROM), and a Random Access Memory (RAM) . The storage device is, for example, a Hard Disc Drive (HDD) . The display device is, for example, a Liquid Crystal Display (LCD). The input device is, for example, a keyboard. The communication device is, for example, a Local Area Network (LAN) for data communication with the printer apparatus 200 or the like.

The printer apparatus 200 includes a communication device, a computer unit, an electrophotographic mechanism, a voice output device as hardware (not illustrated). The data processing apparatus 100 and the printer apparatus 200 are totally controlled by the computer unit which executes a computer program for controlling the respective units so that the respective units are logically established as respective functions as illustrated in Fig. 1.

The data processing apparatus 100 includes first and second printer drivers according to the computer program. Although detailed description will be given later, the first printer driver corresponds to the transmission converting unit 130, the data transmitting unit 140, the transmission confirming unit 150, and the alarm providing unit 160. The first printer driver converts an electronic data into print data in a general PDL format such as the PCL or the LIPS, and then transmits the print data to the printer apparatus 200 via the transmission device.

When the electronic data to be converted into the print data such as the PCL format is an XPS format, the first printer driver determines the presence or absence of an alteration. When the alteration is detected on the electronic data of the XPS format, the first printer driver provides alarm data on the print data to be transmitted to the printer apparatus 200.

The second printer driver corresponds to the data transmitting unit 140, and transmits the electronic data in the XPS format to the printer apparatus 200 by the communication device as the print data without converting into the PCL format or the like. Therefore, a function of the input device to make a selection between the first and second printer drivers corresponds to the output operating unit 120.

To output the electronic data in the XPS format as the print data without converting into the PCL format or the like means that, for example, to output the electronic data in the unprocessed XPS format with the provision of data required when printing out, such as the number of copies or printing paper to be used.

The printer apparatus 200 is provided with a printer controller through the computer program. The printer controller corresponds to the data receiving unit 210, the alarm detecting unit 230, and the reception confirming unit 240.

Therefore, when print data is received by the communication device, the print data is converted into image data and is printed out by the electrophotographic mechanism. On the other hand, when the electronic data in the XPS format is received by the communication device, the electronic data is converted into the image data and is printed out by the electrophotographic mechanism.

However, when print data not in the XPS format, but in the PCL format or the like is received and printed out, the presence or absence of an alarm data is determined and, when the alarm data is detected, the voice output device is caused to output an alteration alarm with a voice. When the electronic data in the XPS format is received and printed out, the presence or absence of an alteration is determined and, when the alteration is detected, the voice output device is caused to output the alteration alarm with a voice.

The computer program of the data processing apparatus 100 as described thus far is described to cause the data processing apparatus 100, for example, to execute processes to receive selection between the direct output and the converted output for the electronic data, to convert the electronic data to be printed out into print data when the converted output is selected, to transmit the electronic data to the printer apparatus 200 when the direct output is selected and to transmit the converted print data to the printer apparatus 200 when the converted output is selected, to detect an alteration of the electronic data to be printed out when the converted output is selected, and to provide predetermined alarm data to the print data to be transmitted when the alteration is detected.

The computer program of the printer apparatus 200 is described to cause the printer apparatus 200 to execute processes of, for example, to selectively receive the electronic data and the print data from the data processing apparatus 100, to print out the received electronic data or the print data, to detect alarm data provided on the received print data, to detect an alteration of the received electronic data, and to report an alteration alarm in both cases where the alteration is detected from the received electronic data and where the alarm data is provided on the received print data.

In the configuration as described above, the processes of operation of the data processing apparatus 100 and the printer apparatus 200 in the data printing system 1000 according to the first embodiment will be described below. The data processing apparatus 100 has electronic data in various formats registered therein. For example, electronic data in the XPS format is also registered.

The electronic data in the XPS format functions as the print data of a page printer as it is. Therefore, the data processing apparatus 100 outputs the electronic data in the XPS format to the printer apparatus 200 directly as the print data.

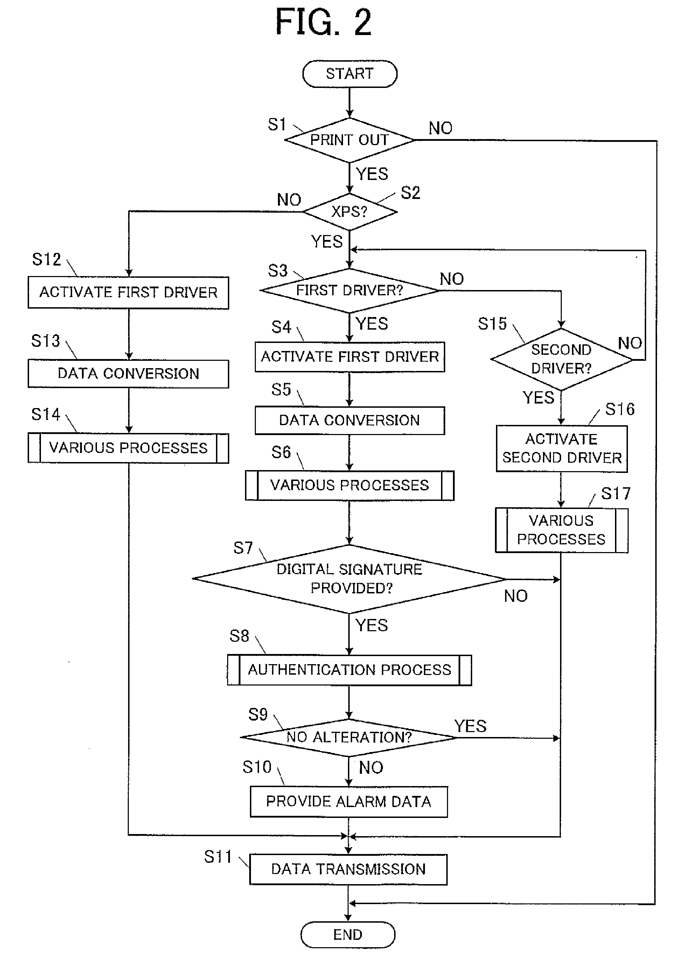

The data processing apparatus 100 has a function to provide a digital signature in the XPS format as a default. Therefore, as illustrated in Fig. 2, when an input of a print out command of the electronic data is operated (Step S1), the data processing apparatus 100 in the first embodiment confirms whether the electronic data is the XPS format or not (Step S2).

The data processing apparatus 100 in the first embodiment is able to output the electronic data in the XPS format to the printer apparatus 200 both via the first printer driver and the second printer driver.

Accordingly, in the case in which the electronic data to be printed out is in the XPS format as described above, whether the first printer driver is selected or the second printer driver is selected is determined (Steps S3 and S15).

Then, when the second printer driver is selected through the keyboard or the like (Step S15), the second printer driver is activated (Step S16). In this case, for example, various setting such as page setting and/or setting of the number of copies are executed corresponding to an entry through the keyboard (Step S17).

When the various processes by the second printer driver is completed, the electronic data in the XPS format is transmitted to the printer apparatus 200 as the print data together with setup data (Step S11).

On the other hand, when the first printer driver is selected through the keyboard or the like (Step S3), the first printer driver is activated (Step S4). Then, the electronic data in the XPS format is converted into print data in the general PDL format such as the PCL by the first printer driver (Step S5) . In this case as well, various setting such as page setting and/or setting of the number of copies are executed corresponding to the entry through the keyboard (Step S6).

Whether or not the digital signature is provided on the electronic data in the XPS format is determined (Step S7). When the digital signature is not provided, the authentication process is not executed, and the converted print data is transmitted to the printer apparatus 200 together with the setup data (Step S11) .

On the other hand, when the digital signature is provided (Step S7), the authentication process of the electronic data is executed using the digital signature (Step S8). When an alteration is not detected through the authentication process (Step S9), that is, when the result of authentication is normal, the converted print data is transmitted to the printer apparatus 200 together with the setup data without providing the predetermined alarm data (Step S11).

On the other hand, when the alteration is detected through the authentication process (Step S9), that is, when the result of authentication is not normal, the predetermined alarm data is provided on the print data (Step S10). Provision of the alarm data is executed, for example, by setting a specific flag at a header of the print data and inverting the flag. The print data after having provided the alarm data in this manner is also transmitted to the printer apparatus 200 together with the setup data (Step S11).

When the electronic data to be printed out is not in the XPS format (Step S2), the electronic data cannot be transmitted directly as the print data. Therefore, the first printer driver is activated automatically, then, conversion into the print data in the PCL format or the like is executed (Steps from S12 to S14), and then the print data after conversion is transmitted to the printer apparatus 200 (Step S11).

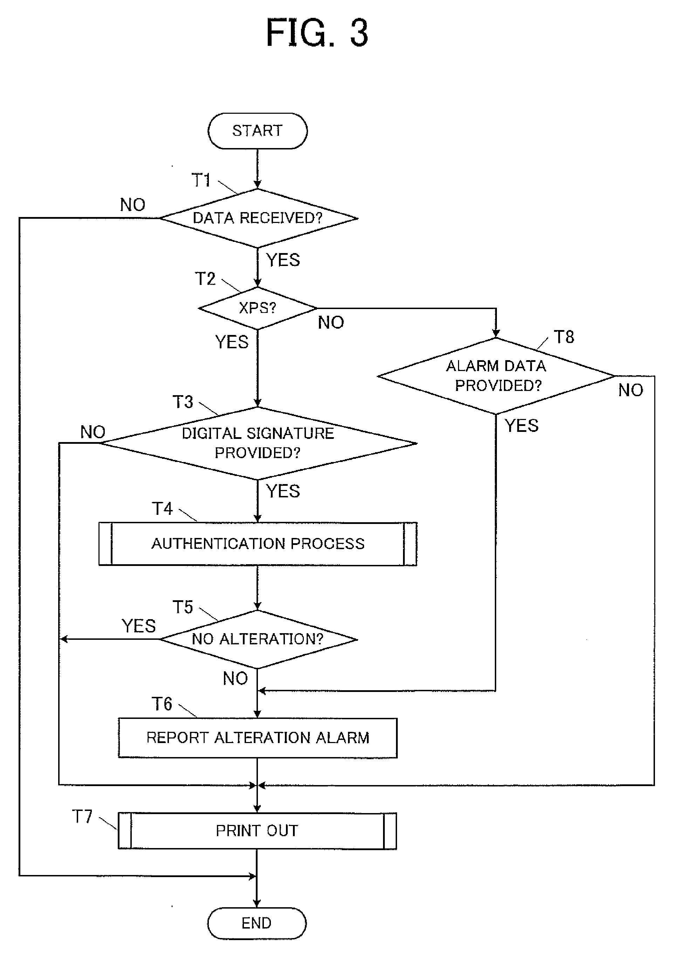

As described above, in the printer apparatus 200 which receives the print data in the XPS format or the PCL format or the like from the data processing apparatus 100 (Step T1), whether or not the print data is in the XPS format is confirmed by the printer controller as illustrated in Fig. 3 (Step T2).

When the print data is not in the XPS format, whether or not alarm data is provided is confirmed (Step T8). When the alarm data is not provided, the print data in question is converted into image data referring to the setup data and printed out as in the related art (Step T7).

On the other hand, when the alarm data is provided on the print data which is not in the XPS format but in the PCL format or the like, an alteration alarm such that "this electronic data to be printed out is altered" is outputted with a voice by the voice output device (Step T6) when the print data in question is printed out (Step T7). This voice output may be repeated until a predetermined time period is elapsed.

When the received print data is the electronic data in the XPS format (Step T2), whether or not the digital signature is provided is confirmed (Step T3) . When the digital signature is not provided, the electronic data in question is converted into image data referring to the setup data and printed out (Step T7).

On the other hand, when the digital signature is provided (Step T3), the authentication process is executed on the electronic data using the digital signature (Step T4). When an alteration is not detected by the authentication process (Step T5), that is, when the result of authentication is normal, the electronic data in question is converted into image data referring to the setup data and printed out (Step T7).

On the other hand, when the alteration is detected through the authentication process (Step T5), that is, when the result of the authentication is not normal, the alteration alarm as shown above is outputted with a voice (Step T6) when the electronic data is printed out (Step T7).

In the data printing system 1000 according to the first embodiment, when the electronic data is altered in a case in which the electronic data in the XPS format, which can be determined whether the alteration is present or not using the digital signature as described above, is printed out, the alteration alarm is outputted with a voice when being printed out.

Therefore, the fact that the ill-intentioned user alters and prints out the electronic data is reported to the people surrounding the apparatus. Therefore, the electronic data is prevented from being printed out inadequately and used.

It is also possible to report the user the fact that the electronic data to be printed out is altered. Therefore, the electronic data which is inadequately altered is prevented from being printed out and used without recognition.

Furthermore, the data processing apparatus 100 in the first embodiment is able to convert the electronic data in the XPS format into the general PDL format such as the PCL or the like to transmit the same to the printer apparatus 200. When the alteration is detected at the time of conversion in this case, the data processing apparatus 100 is able to provide alarm data to the print data in the general PDL format and transmit the same.

Therefore, even with the printer apparatus which cannot print the electronic data in the XPS format directly, an alteration of the electronic data may be reported as long as a function to recognize the alarm data provided on the print data in the general PDL format and output the alteration alarm is provided.

In contrast, when the printer apparatus 200 in the first embodiment receives the electronic data in the XPS format, the printer apparatus 200 is able to detect and report the alteration. Therefore, even when the data processing apparatus 100 transmits the electronic data in the XPS format without detecting the alteration thereon, the alteration of the electronic data is reported.

In addition, the data processing apparatus 100 is provided with the first and second printer drivers, and hence is able to output the electronic data in the XPS format directly and to output the electronic data after having converted into the print data in the PCL format or the like according to the selection of the printer drivers.

Therefore, the convenience of the user is improved. In addition, the printer apparatus 200 is able to report the alteration of the electronic data irrespective of the selected printer driver.

Furthermore, the function to report the alteration of the electronic data as described above is achieved by the printer driver which is software installed in the data processing apparatus 100 and the printer controller which is software installed in the printer apparatus 200.

Therefore, it is not necessary to change the hardware in the data processing apparatus 100 and the printer apparatus 200. For example, the hardware installed in the related art for informing error may be used as the voice output device which outputs the alteration alarm with a voice.

The invention is not limited to the first embodiment, and various modifications may be made without departing the scope of the invention. For example, in the first embodiment, the case in which the function to detect the alteration of the electronic data is provided in both of the data processing apparatus 100 and the printer apparatus 200 is exemplified. However, this function may be provided only in one of the data processing apparatus 100 and the printer apparatus 200.

For example, the data processing apparatus (not illustrated) is provided with the transmission converting unit 130, the data transmitting unit 140, the transmission confirming unit 150, and the alarm providing unit 160. The transmission converting unit 130 converts electronic data to be printed out into print data. The data transmitting unit 140 transmits the converted print data into the printer apparatus 200. The transmission confirming unit 150 detects an alteration of the electronic data to be printed out. The alarm providing unit 160 provides predetermined alarm data to the print data to be transmitted when the alteration is detected. The printer apparatus (not illustrated) does not have a function to print electronic data in the XPS format, and includes the data receiving unit 210, the data printing unit 220, the alarm detecting unit 230, and the alarm reporting unit 250. The data receiving unit 210 receives the print data from the data processing apparatus 100. The data printing unit 220 prints out the received print data. The alarm detecting unit 230 detects alarm data provided on the received print data. The alarm reporting unit 250 reports an alteration alarm when the alarm data is detected.

In this case, the printer apparatus is not able to print the electronic data in the XPS format directly, but is able to recognize the alarm data provided on the print data and outputs the alteration alarm.

The data processing apparatus (not illustrated) may not be provided with the function to detect the presence or absence of the alteration of the electronic data in the XPS format, but provided with an electronic transmitting unit for transmitting the electronic data to be printed out to the printer apparatus 200. In this case, the printer apparatus (not illustrated) includes an electronic receiving unit, the data printing unit 220, the reception confirming unit 240, and the alarm reporting unit 250. The electronic receiving unit receives the electronic data from the data processing apparatus 100. The data printing unit 220 prints out the received electronic data. The reception confirming unit 240 detects the presence or absence of alteration of the received electronic data using the digital signature included in the received electronic data. The alarm reporting unit 250 reposts an alteration alarm when the alteration is detected in the received electronic data.

In this case, the data processing apparatus transmits the electronic data without detecting the presence or absence of the alteration of the electronic data. However, upon reception of the electronic data in the XPS format, the data processing apparatus detects the presence or absence of alteration and, when the alteration is detected, reports the presence of the alteration.

In addition, in the first embodiment shown above, the example in which the printer apparatus 200 outputs the alteration alarm only with a voice is shown. However, the data processing apparatus 100 may be provided with a mail transmitting unit (not illustrated) and an alarm transmitting unit (not illustrated). The mail transmitting unit transmits electronic mails. The alarm transmitting unit causes the mail transmitting unit to transmit the electronic mail including an alteration alarm to a predetermined destination when an alteration is detected.

In this case, since the alteration alarm is transmitted to the predetermined destination via a mail, the fact that the altered electronic data is printed out may be reported to, for example, an administrator who is in a location apart from the printer apparatus 200.

In the same manner, the printer apparatus 200 is provided with the mail transmitting unit (not illustrated) and the alarm transmitting unit (not illustrated). The mail transmitting unit transmits electronic mails. The alarm transmitting unit causes the mail transmitting unit to transmit the electronic mail including the alteration alarm to a predetermined destination when an alteration is detected.

The printer apparatus 200 may further include a facsimile communication unit (not illustrated) and the alarm transmitting unit (not illustrated). The facsimile communication unit transmits facsimile data. The alarm transmitting unit causes the facsimile transmitting unit to transmit facsimile data including an alteration alarm to a predetermined destination when an alteration is detected.

In this case, the printer apparatus 200 is able to transmit the alteration alarm to the predetermined destination via facsimile. In particular, when the printer apparatus 200 includes Multi Function Peripherals (MFP), the facsimile function is installed as a standard function in many cases. Therefore, the application as described above is effective.

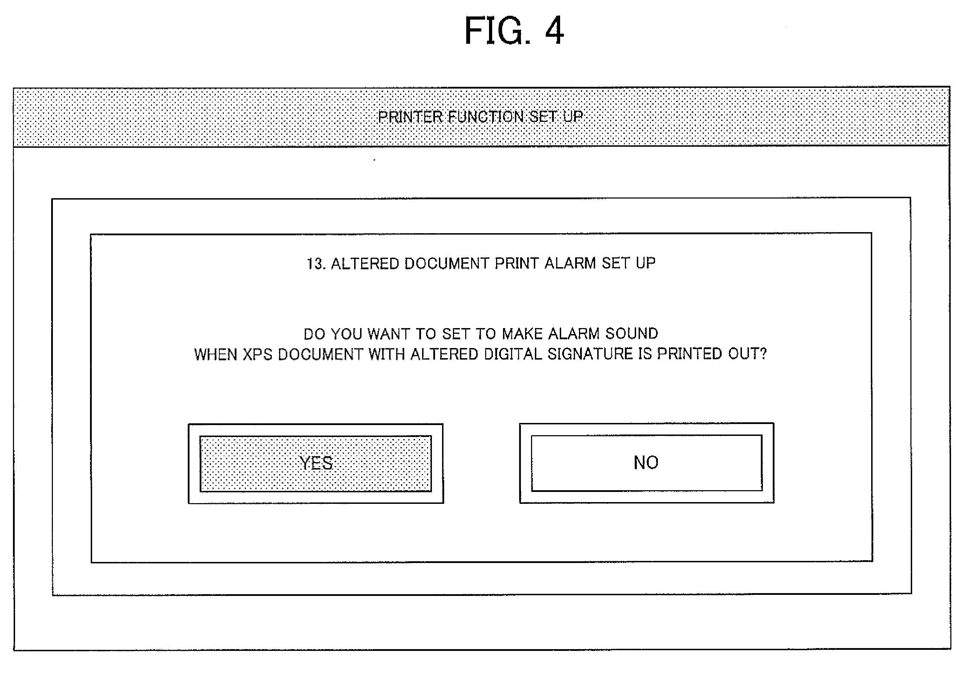

Furthermore, in the embodiment shown above, the data processing apparatus 100 and the printer apparatus 200 are assumed to be provided fixedly with a function to detect an alteration of the electronic data and report an alarm. In other word, the example in which the alteration is detected and the alarm report is executed for all the electronic data to be processed has been described. However, as illustrated in Fig. 4, for example, a configuration in which whether the alarm report is executed or not may be set through the function setting display of the printer driver and/or the printer controller is also applicable.

However, such a function involves the problem of security. Therefore, the function to set whether the alarm report is executed or not as described above may be protected by a password so that the setting cannot be achieved without entering the password.

In this case, setting of the function to detect the alteration and reports the alarm can be changed only by an adequate user such as an administrator, so that lowering of security in printing out of the electronic data is avoided.

In the embodiment shown above, the case in which the printer driver and the printer controller are installed in the data processing apparatus 100 and the printer apparatus 200 as software has bee described. However, a configuration in which the printer driver and/or the printer controller composed of hardware is installed in the data processing apparatus and/or the printer apparatus is also applicable (not illustrated).

Furthermore, in the embodiment shown above, the case in which the first printer driver for converting the general electronic data or the electronic data in the XPS format into the general print data in the PDL format such as the PCL and the second printer driver for outputting the electronic data in the XPS format without conversion as the print data are installed in the data processing apparatus 100 has been described.

However, when the printer driver as described above is implemented as a product, various modes are employed. For example, the two printer drivers as described above may be integrated into one unit (not illustrated).

The printer driver included in the data printing system 1000 may be divided into a first printer driver for converting general electronic data to general print data, a second printer driver for converting electronic data in the XPS format to general print data, and a third printer driver for outputting the electronic data in the XPS format without converting into the general print data (not illustrated).

[0097] Furthermore, the printer driver provided in the data printing system 1000 may include a first printer driver for converting the general electronic data into the general print data and a second printer driver which is able both to output the electronic data in the XPS format after having converted into the general print data and to output without conversion (not illustrated).

The printer driver provided in the data printing system 1000 may include a first printer driver for converting the general electronic data into the general print data and outputs the electronic data in the XPS format without conversion, and a second printer driver for outputting the electronic data in the XPS format after having converted into the general print data (not illustrated).

Furthermore, in the embodiment shown above, the case in which when the electronic data whose print out command is supplied is not in the XPS format, the first printer driver is activated automatically, and the electronic data is converted into the general print data is shown.

However, when the second printer driver having a function to covert the electronic data in the XPS format into the general print data and output the same and a function to output the same without converting into the general print data does not process the general electronic data as described above, it may be configured in such a manner that the electronic data is processed in the second printer driver after having converted into the XPS format when a print out command of the general electronic data other than the XPS format is issued in a state in which the second printer driver is selected.

### Second Embodiment

Referring now to the drawings, a second embodiment of the invention will be described below. A data processing apparatus 300 in the second embodiment outputs electronic data provided with a digital signature to a printer apparatus 400 as print data.

Therefore, the data processing apparatus 300 includes a signature confirming unit 310 for confirming whether or not the electronic data to be outputted is adequate or inadequate on the basis of the digital signature and a data processing unit 320 for executing a predetermined process on the electronic data when it is not confirmed to be adequate.

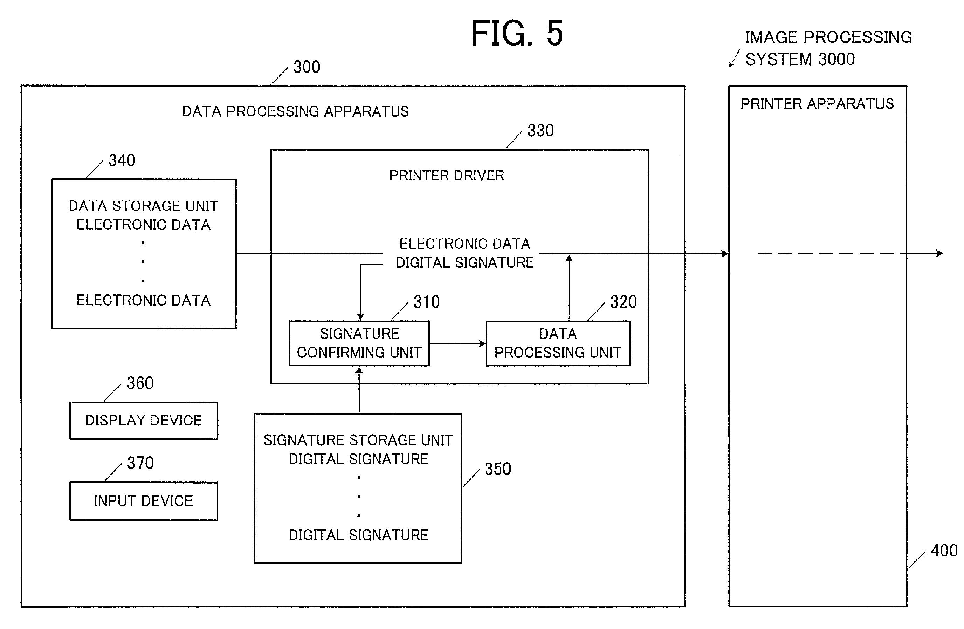

More specifically, as illustrated in Fig. 5, an image processing system 3000 according to the second embodiment includes the data processing apparatus 300 and the printer apparatus 400. The data processing apparatus 300 includes a computer unit (not illustrated), a data storage unit 340, a signature storage unit 350, a display device 360, and an input device 370. The computer unit includes the CPU, the ROM, and the RAM. The data storage unit 340 and the signature storage unit 350 are each composed of a storage area in the HDD. The display device 360 is the LCD or the like. The input device 370 is a keyboard or the like.

The data storage unit 340 stores various electronic data outputted as print data. The signature storage unit 350 stores reliable digital signatures registered therein in advance. The display device 360 displays various data. The input device 370 is operated to enter various data.

The data processing apparatus 300 includes various computer programs installed therein, and various functions are implemented corresponding to the installed computer programs. The data processing apparatus 300 includes a printer driver 330 implemented by one of the above-described computer programs, and the above-described signature confirming unit 310 and the data processing unit 320 are installed in the printer driver 330.

The signature confirming unit 310 confirms whether or not the digital signature is provided on the electronic data to be outputted to the printer apparatus 400 as the print data. The signature confirming unit 310 also confirms whether or not the electronic data to be outputted is altered using the digital signature.

In addition, the signature confirming unit 310 confirms whether or not the digital signature provided on the electronic data to be outputted is reliable by confirming whether or not the digital signature provided on the electronic data to be outputted is registered in the signature storage unit 350.

Although detailed description will be given later, when the electronic data is not confirmed to be adequate by the signature confirming unit 310 as described above, that is, when the electronic data is determined to be inadequate by the signature confirming unit 310, the data processing unit 320 inserts an alarm message into the electronic data to be outputted as the print data.

The computer program as described above includes description to cause the data processing apparatus 300, for example, to execute processes of outputting the electronic data to the printer apparatus 400 as print data, confirming whether the electronic data to be outputted is adequate or inadequate on the basis of the digital signature, and executing a predetermined process on the electronic data when it is not confirmed to be adequate.

In the configuration shown above, a method of processing data by the data processing apparatus 300 in the second embodiment will be described below. The data processing apparatus 300 includes electronic data in various formats registered therein, and, for example, electronic data in the XPS format is also registered therein.

The electronic data in the XPS format functions as the print data of the page printer as is. Therefore, the data processing apparatus 300 outputs the electronic data in the XPS format is outputted to the printer apparatus 400 directly as the print data.

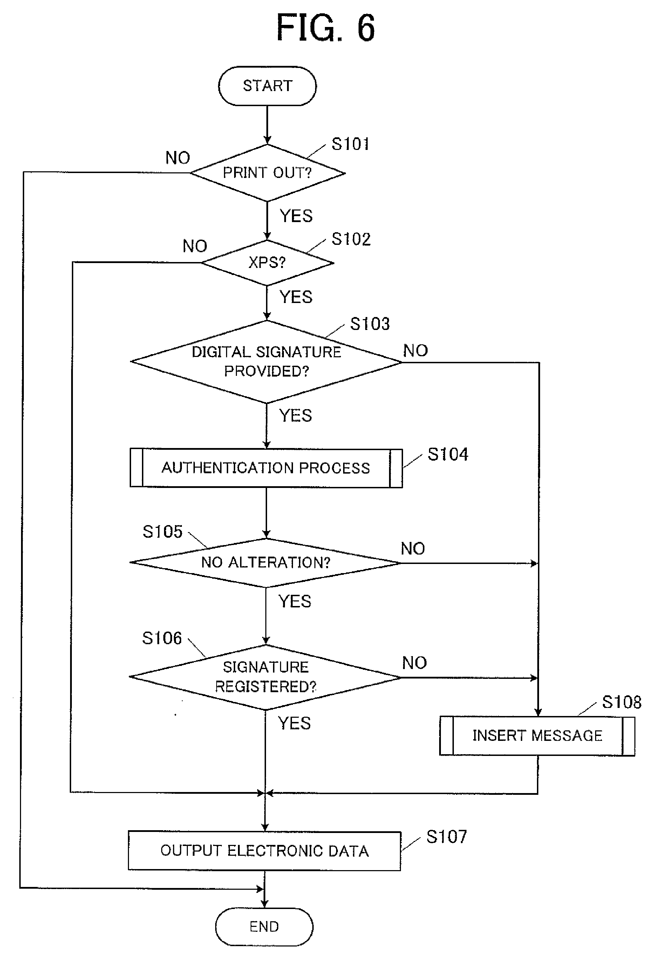

The data processing apparatus 300 has a function to provide a digital signature in the XPS format as a default. Therefore, as illustrated in Fig. 6, when an input of a print out command of the electronic data is operated (Step S101), the data processing apparatus 300 in the second embodiment confirms whether the electronic data is the XPS format or not (Step S102). When the electronic data is not in the XPS format, the electronic data is outputted directly to the printer apparatus 400 without being confirmed whether or not the digital signature is provided and printed (Step 5107).

On the other hand, when the electronic data is in the XPS format (Step S102), whether or not the digital signature is provided is confirmed (Step S103). When the digital signature is not provided, an alarm message such that "this electronic data is not provided with a digital signature" or the like is inserted into the electronic data as header data (Step S108).

Since the electronic data included the alarm message inserted therein is outputted (transmitted) to the printer apparatus 400 (Step S107), the electronic data having the above-described alarm message inserted as the header data is printed out by the printer apparatus 400 (not illustrated).

When the provision of the digital signature is confirmed (Step S103), the authentication process of the electronic data is executed with the digital signature (Step S104). When an alteration is detected by the authentication process (Step S105), an alarm message such as "this electronic data is altered since it is created by xxx in dd/mm/yy " is inserted into the electronic data as header data (Step S108).

Since the electronic data including this alarm message inserted therein is outputted (transmitted) to the printer apparatus 400 (Step S107), the printer apparatus 400 prints out the electronic data having the above-described alarm message inserted as the header data (not illustrated).

When the fact that the electronic data is not altered is determined by the authentication process (Step S105), whether or not the digital signature is registered as a reliable digital signature is confirmed (Step S106).

When it is not confirmed, an alarm message such as "This electronic data is created by xxx in dd/mm/yy. However, whether or not the digital signature is reliable is not confirmed" is inserted into the electronic data as header data (Step S108).

Since the electronic data in which this alarm message is inserted is outputted (transmitted) to the printer apparatus 400 (Step S107), the printer apparatus 400 prints out the electronic data including the above-described alarm message as the header data (not illustrated).

On the other hand, when the digital signature is confirmed to be reliable (Step S106), the electronic data is directly outputted to the printer apparatus 400 (Step S107). The printer apparatus 400 directly prints out the electronic data in which the alarm message is not inserted (not illustrated).

In the data processing apparatus 300 according to the second embodiment, when the digital signature is not provided on the digital data to be outputted to the printer apparatus 400 as the print data as described above, the alarm message indicating that the digital signature is not provided is inserted into the electronic data. Therefore, the fact that the digital signature is not provided is reported to the user according to the printed result of the electronic data.

Even when the digital signature is provided on the electronic data to be outputted as the print data, when an alteration is detected by the authentication process, the alarm message indicating that the alteration is detected is inserted into the electronic data. Therefore, the fact that the electronic data is altered since the timing when the digital signature is provided is reported to the user according to the printed result of the electronic data.

Furthermore, even when the electronic data to be outputted as the print data is confirmed not to have altered by the digital signature, if the digital signature is not registered as a reliable digital signature, the alarm message indicating that the digital signature is not registered is inserted into the electronic data. Therefore, the fact that the digital signature provided thereto is not reliable is reported to the user according to the printed result of the electronic data.

In addition, the process of operation described above is executed by the printer driver 330 of the data processing apparatus 300. Therefore, it is not necessary to install new hardware or software to the printer apparatus 400 in order to implement the process of operation as described above.

In particular, the printer driver 330 is installed in the data processing apparatus 300 through installation of software. Therefore, a function to execute a predetermined process when the electronic data is not adequate as described above is achieved easily by the data processing apparatus 300.

In addition, the alarm message as described above is inserted into the electronic data as a header. Therefore, the alarm message is provided without affecting the printed image of the electronic data.

When the digital signature is provided to the electronic data to be outputted as print data, the fact that the electronic data is not altered is confirmed from the digital signature, and the digital signature is registered as a reliable digital signature, the data processing apparatus 300 outputs (transmits) the electronic data to the printer apparatus 400 without inserting the alarm message. Therefore, the adequate electronic data is printed out as in the related art without inserting a useless alarm message.

Even when the electronic data is not in the XPS format, the electronic data is outputted to the printer apparatus 400. Therefore, the alarm message as described above is not uselessly inserted into the electronic data having the function to provide a digital signature as a default.

The invention is not limited to the second embodiment, and various modifications may be made without departing from the scope of the invention. For example, in the embodiment shown above, the example in which the reliable digital signature is registered to the data processing apparatus 300 in advance, and whether or not the digital signature provided on the electronic data to be outputted is reliable is confirmed referring to the digital signature has been described.

However, a configuration in which a signature guarantee site in which the reliable digital signatures are registered exists in internet as a website in advance, and the data processing apparatus includes an internet connecting unit for accessing the signature guarantee site via the internet (not illustrated).

In this case, the data processing apparatus confirms whether or not the digital signature provided to the electronic data is reliable by confirming whether or not the digital signature provided on the electronic data to be outputted is registered in the signature guarantee site.

In the data processing apparatus as described above, the digital signature can be confirmed always on the basis of the updated registration. On the other hand, the data processing apparatus that confirms the digital signature on the electronic data using its own registration is able to confirm the digital signature in a standalone mode.

Adequate one of the method of using the digital guarantee site and the method of using its own registration may be selected depending on various conditions. It is also possible to confirm the digital signature on the electronic data using its own registration first and, when confirmation is not successful, to confirm the digital signature on the electronic data using the website.

In the embodiment shown above, the example in which the alarm message is inserted into the electronic data to be outputted as the print data as the header when the confirmation to be adequate is not successful has been described. However, the alarm data may be inserted as footer. The alarm data may be combined as a watermark.

When the confirmation to be adequate is not achieved, the electronic data to be outputted as the print data may be converted into a blank state. When the confirmation to be adequate is not achieved, the electronic data to be outputted as the print data may be converted into a totally black state.

When the confirmation to be adequate is not achieved, output of the electronic data may be stopped. In such cases, the electronic data is not practically printed out, and hence leak of electronic data having high security is effectively prevented.

When the confirmation that the electronic data is adequate is not achieved, an alarm may be reported. Such the alarm may be achieved, for example, by displaying the alarm message on the display device 360.

When the confirmation to be adequate is not achieved, it is also possible to suspend output of the electronic data, report the alarm by displaying on the display device 360 in a state in which the output of the electronic data is suspended, accept an entry for giving an instruction to release the suspension, release the suspension when the instruction to release is entered.

In this case, when the fact that the electronic data is not provided with the digital signature is reported to a user and then the confirmation is entered by the user, the electronic data may be printed out. As a matter of course, insertion of the alarm message as described above may be executed on the electronic data to be printed out.

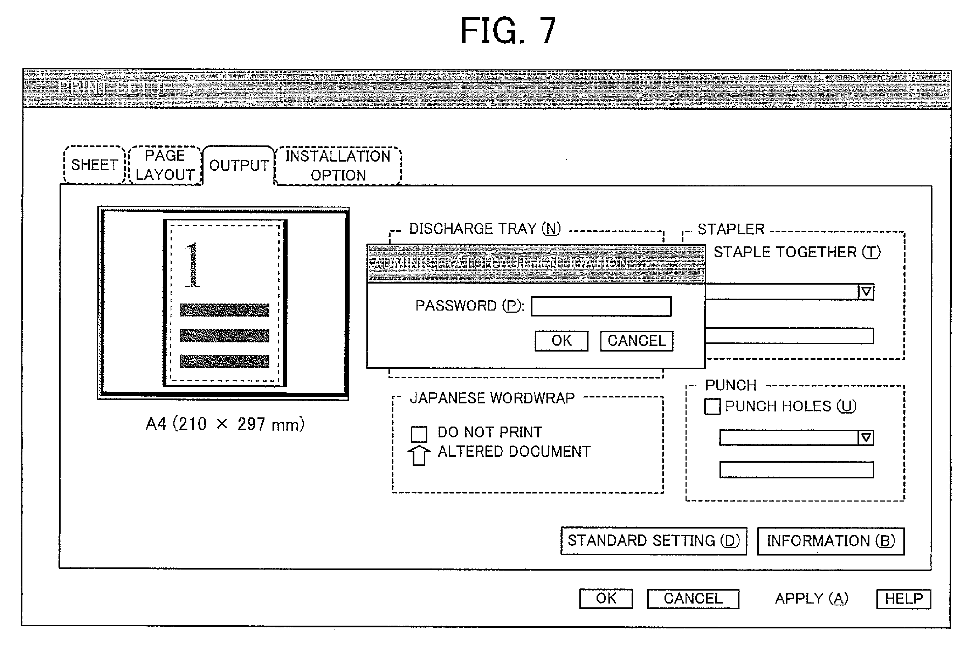

In addition, in the embodiment shown above, it is assumed that the functions of the signature confirming unit 310 and the data processing unit 320 are fixed. However, as illustrated in Fig. 7, a configuration in which setup of the functions of the signature confirming unit 310 and the data processing unit 320 may be entered by the input device 370 when the function setting display of the printer driver 330 including partly a password input window is displayed on the display device 360 and the correct password is entered is also applicable.

In this case, the function of the signature confirming unit 310 or the data processing unit 320 may be set up by the user as desired. In addition, since such setting up of the function can only be done by the adequate user such as the administrator, the lowering of security in printing out of the electronic data is avoided.

The functions of the signature confirming unit 310 and the data processing unit 320 may be combined variously. For example, a set up configuration such that the presence or absence of the digital signature is confirmed, but the presence or absence of the alteration is not confirmed is also possible.

Furthermore, a configuration such that the electronic data is not printed out when it is not provided with the digital signature, the alarm message is inserted into the electronic data when it is provided with the digital signature but includes the alteration detected as header, and an alarm watermark is integrated in the electronic data when alteration is not detected but the digital signature is not reliable is also applicable.

In the embodiment shown above, the example in which the printer driver is installed in the data processing apparatus 300 as the software is exemplified. However, the printer driver formed of the hardware may be installed in the data processing apparatus.

While the present invention has been described with respect to preferred embodiments thereof, it will be apparent to those skilled in the art that the disclosed invention may be modified in numerous ways and may assume many embodiments other than those specifically set out and described above. Accordingly, it is intended by the appended claims to cover all modifications of the invention that fall within the true scope of the invention.

## Claims

1. A data printing system comprising:
a data processing apparatus; and
a printer apparatus;
wherein the data processing apparatus includes:
a transmission converting unit for converting electronic data to be printed out into print data;
a data transmitting unit for transmitting the converted print data to the printer apparatus;
a transmission confirming unit for detecting an alteration of the printed out electronic data; and
an alarm providing unit for providing predetermined alarm data to the print data to be transmitted when the alteration is detected, and
wherein the printer apparatus includes;
a data receiving unit for receiving the print data from the data processing apparatus;
a data printing unit for printing out the received print data;
an alarm detecting unit for detecting the alarm data provided on the received print data; and
an alarm reporting unit for reporting an alteration alarm when the alarm data is detected.

2. A data printing system according to claim 1,
wherein the data processing apparatus further includes:
a mail transmitting unit for transmitting an electronic mail; and
an alarm transmitting unit for causing the mail transmitting unit to transmit the electronic mail including the alteration alarm to a predetermined destination when the alteration is detected.

3. A data printing system according to claim 1 or 2,
wherein the data processing apparatus further includes:
a facsimile communication unit for communicating facsimile data; and
an alarm transmitting unit for causing the facsimile communication unit to transmit the facsimile data including the alteration alarm to a predetermined destination when the alteration is detected.

4. A data printing system comprising:
a data processing apparatus; and
a printer apparatus,
wherein the data processing apparatus includes:
an electronic transmission unit for transmitting electronic data to be printed out to the printer apparatus, and
wherein the printer apparatus includes:
an electronic receiving unit for receiving the electronic data from the data processing apparatus;
a data printing unit for printing out the received electronic data;
a reception confirming unit for detecting an alteration of the received electronic data; and
an alarm reporting unit for reporting an alteration alarm when the alteration is detected.

5. A data printing system according to claim 4,
wherein the printer apparatus further includes:
a mail transmitting unit for transmitting an electronic mail; and
an alarm transmitting unit for causing the mail transmitting unit to transmit the electronic mail including the alteration alarm to a predetermined destination when the alteration is detected.

6. A data printing system according to claim 4 or 5,
wherein the printer apparatus further includes:
a facsimile communication unit for communicating facsimile data; and
an alarm transmitting unit for causing the facsimile communication unit to transmit the facsimile data including the alteration alarm to a predetermined destination when the alteration is detected.

7. A data printing system comprising:
a data processing apparatus and a printer apparatus,
wherein the data processing apparatus includes:
an output operating unit for making a selection between direct output and converted output of electronic data;
a transmission converting unit for converting the electronic data to be printed out into print data when the converted output is selected;
a data transmitting unit for transmitting the electronic data to the printer apparatus when the direct output is selected, and transmitting the converted print data to the printer apparatus when the converted output is selected;
a transmission confirming unit for detecting an alteration of the electronic data to be printed out when the converted output is selected; and
an alarm providing unit for providing predetermined alarm data on the print data to be transmitted when the alteration is detected, and
wherein the printer apparatus includes:
a data receiving unit for selectively receiving the electronic data and the print data from the data processing apparatus;
a data printing unit for printing out the received electronic data or the print data;
an alarm detecting unit for detecting the alarm data provided on the received print data;
a reception confirming unit for detecting the alteration of the received electronic data; and
an alarm reporting unit for reporting an alteration alarm in both cases in which the alteration is detected from the received electronic data and where the alarm data is provided on the received print data.

8. A data printing system according to claim 7,
wherein the data processing apparatus further includes:
a mail transmitting unit for transmitting an electronic mail; and
an alarm transmitting unit for causing the mail transmitting unit to transmit the electronic mail including the alteration alarm to a predetermined destination when the alteration is detected.

9. A data printing system according to claim 7 or 8,
wherein the printer apparatus further includes:
a mail transmitting unit for transmitting an electronic mail; and
an alarm transmitting unit for causing the mail transmitting unit to transmit the electronic mail including the alteration alarm to a predetermined destination when the alteration is detected.

10. A data printing system according to any of claims 7 to 9,
wherein the data processing apparatus further includes:
a facsimile communication unit for communicating facsimile data; and
an alarm transmitting unit for causing the facsimile communication unit to transmit the facsimile data including the alteration alarm to a predetermined destination when the alteration is detected.

11. A data printing system according to any of claims 7 to 10,
wherein the printer apparatus further includes:
a facsimile communication unit for communicating facsimile data; and
an alarm transmitting unit for causing the facsimile communication unit to transmit the facsimile data including the alteration alarm to a predetermined destination when the alteration is detected.

12. A data processing apparatus comprising:
a transmission converting unit for converting electronic data to be printed out to print data;
a data transmitting unit for transmitting the converted print data to a printer apparatus;
a transmission confirming unit for detecting an alteration of the electronic data to be printed out; and
an alarm providing unit for providing predetermined alarm data to the print data to be transmitted when the alteration is detected.

13. A data processing apparatus comprising:
an output operating unit for making a selection between direct output and converted output of electronic data;
a transmission converting unit for converting the electronic data to be printed out to print data when the converted output is selected;
a data transmitting unit for transmitting the electronic data to a printer apparatus when the direct output is selected and transmitting the converted print data to the printer apparatus when the converted output is selected;
a transmission confirming unit for detecting an alteration of the electronic data to be printed out when the converted output is selected; and
an alarm providing unit for providing predetermined alarm data to the print data to be transmitted when the alteration is detected.

14. A printer apparatus comprising:
a data receiving unit for receiving print data from a data processing apparatus;
a data printing unit for printing out the received print data;
an alarm detecting unit for detecting alarm data provided on the received print data; and
an alarm reporting unit for reporting an alteration alarm when the alarm data is detected.

15. A printer apparatus comprising:
an electronic receiving unit for receiving electronic data from a data processing apparatus;
a data printing unit for printing out the received electronic data;
a reception confirming unit for detecting an alteration of the received electronic data; and
an alarm reporting unit for reposting an alteration alarm when the alteration is detected.

16. A printer apparatus comprising:
a data receiving unit for selectively receiving electronic data and print data from a data processing apparatus;
a data printing unit for printing out the received electronic data or the print data;
an alarm detecting unit for detecting alarm data provided on the received print data;
a reception confirming unit for detecting an alteration of the received electric data; and
an alarm reporting unit for reporting an alteration alarm in both cases where the alteration is detected from the received electronic data and where the alarm data is provided on the received print data.

17. A data processing apparatus for outputting electronic data provided with a digital signature to a printer apparatus as print data comprising:
a signature confirming unit for confirming whether the outputted electronic data is adequate or inadequate on the basis of digital signature; and
a data processing unit for executing a predetermined processing to the electronic data when it is not determined to be adequate.

18. A data processing apparatus according to claim 17,
wherein the signature confirming unit confirms whether or not the digital signature is provided on the electronic data to be outputted.

19. A data processing apparatus according to claim 17 or 18,
wherein the signature confirming unit confirms whether or not the electronic data to be outputted is altered by the digital signature.

20. A data processing apparatus according to any of claims 17 to 19,
wherein the signature confirming unit confirms whether or not the digital signature provided on the electronic data to be outputted is reliable.

21. A data processing apparatus according to claim 20, further comprising:
a signature storage unit in which the reliable digital signature is registered in advance,
wherein the signature confirming unit conforms whether the digital signature provided on the electronic data to be outputted is registered in the signature storage unit.

22. A data processing apparatus according to claim 20 or 21,
wherein a signature guarantee site in which the reliable digital signatures are registered exists in internet as a website in advance,
wherein an internet connecting unit for accessing the signature guarantee site via the internet is further provided, and
wherein the signature confirming unit confirms whether or not the digital signature provided on the electronic data to be outputted is registered in the signature guarantee site.

23. A data processing apparatus according to any of claims 17 to 22,
wherein the data processing unit inserts an alarm message in the electronic data to be outputted as the print data without having confirmed to be adequate.

24. A data processing apparatus according to any of claims 17 to 23,
wherein the data processing unit integrates a watermark in the electronic data to be outputted as the print data without having confirmed to be adequate.

25. A data processing apparatus according to any of claims 17 to 24,
wherein the data processing unit converts the electronic data to be outputted as the print data without having confirmed to be adequate into a blank state.

26. A data processing apparatus according to any of claims 17 to 25,
wherein the data processing unit converts the electronic data to be outputted as the print data without having confirmed to be adequate into a totally black state.

27. A data processing apparatus according to any of claims 17 to 26,
wherein the data processing unit stops output of the electronic data which is not confirmed to be adequate.

28. A data processing apparatus according to any of claims 17 to 27, further comprising:
an alarm reporting unit for reporting an alarm when the electronic data is not confirmed to be adequate.

29. A data processing apparatus according to any of claims 17 to 28, wherein the data processing unit further comprising:
an alarm reporting unit for suspending output of the electronic data which is not confirmed to be adequate and reporting an alarm in a state in which the output of the electronic data is suspended;
a release input unit for accepting an entry for giving an instruction to release the suspension; and
an output control unit for releasing the suspension when the instruction to release the suspension is entered.

30. A data processing apparatus according to any of claims 17 to 29, further comprising;
a printer driver including the signature confirming unit and the data processing unit installed therein for outputting the electronic data to the printer apparatus as the print data;
a display device for displaying various data such as a function setting display of the printer driver; and
an input device for accepting various entries such as an entry to the function setting display;
wherein the printer driver includes partly a password input window displayed on the function setting display thereof, and does not accept the entry for setting a function to at least one of the signature confirming unit and the data processing unit when the password is not entered into the input window.
